Europäisches Patentamt

European Patent Office

Office européen des brevets

(19)

(11) EP 0 976 004 B1

(12) FASCICULE DE BREVET EUROPEEN

(45) Date de publication et mention
de la délivrance du brevet:
**05.06.2002 Bulletin 2002/23**

(21) Numéro de dépôt: **98913874.8**

(22) Date de dépôt: **10.03.1998**

(51) Int Cl.⁷: **G02B 23/12**, H04N 3/09,
G01J 5/06

(86) Numéro de dépôt international:
**PCT/FR98/00477**

(87) Numéro de publication internationale:
**WO 98/41892 (24.09.1998 Gazette 1998/38)**

(54) **ARCHITECTURE OPTIQUE POUR SYSTEME DE VISION INFRAROUGE**

Optische Architektur für infrarotes Betrachtungssystem

OPTICAL ARCHITECTURE FOR INFRARED VIEWING SYSTEM

(84) Etats contractants désignés:
**DE FR GB IT**

(30) Priorité: **14.03.1997 FR 9703080**

(43) Date de publication de la demande:
**02.02.2000 Bulletin 2000/05**

(73) Titulaire: **Thales**
**75008 Paris (FR)**

(72) Inventeurs:
• **FORESTIER, Bertrand, Thomson-CSF S.C.P.I.**
**F-94117 Arcueil Cedex (FR)**
• **RAGOT, Dominique, Thomson-CSF S.C.P.I.**
**F-94117 Arcueil Cedex (FR)**

• **ROLLIN, Jo[l, Thomson-CSF S.C.P.I.**
**F-94117 Arcueil Cedex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(56) Documents cités:
| | |
|---|---|
| EP-A- 0 044 791 | EP-A- 0 593 327 |
| EP-A- 0 639 783 | DE-A- 2 515 128 |
| DE-A- 3 234 223 | FR-A- 2 613 831 |
| GB-A- 2 248 310 | US-A- 4 109 149 |
| US-A- 4 972 085 | US-A- 5 136 421 |
| US-A- 5 371 369 | US-A- 5 444 250 |

## Description

L'invention concerne le domaine des architectures optiques pour système de vision infrarouge, qui peuvent s'appliquer notamment à une jumelle ou à une caméra.

De manière connue, une architecture optique pour système de vision infrarouge comporte généralement un afocal frontal dont l'une des fonctions est de collecter le flux d'une scène, un dispositif optique formant une image de la scène et un détecteur refroidi avec son diaphragme froid.

Les caméras dites de première génération comportent des moyens de balayage effectuant un balayage bidimensionnel, c'est à dire horizontalement et verticalement, de la scène. Le détecteur est un détecteur quasi ponctuel, c'est à dire une petite matrice de détecteurs élémentaires ayant un ou quelques-uns de ces détecteurs élémentaires dans chacune des deux dimensions, horizontale et verticale. Ce détecteur fonctionne alors en mode AC, c'est à dire en éliminant la composante continue ; il ne prend donc en compte que les variations du signal au cours du balayage.

Les caméras dites de deuxième génération comportent un afocal frontal de préférence de type Képler, des moyens de balayage comportant préférentiellement un miroir rotatif autour d'un axe vertical de la scène et permettant un balayage horizontal de la scène, un dispositif optique formant une image de la scène, et un détecteur de type barrette, c'est à dire ayant un grand nombre de détecteurs élémentaires dans le sens vertical couvrant toute la scène dans la dimension verticale, à effet TDI (Time Delay Integration : c'est à dire que la barrette est en fait une matrice comportant quelques détecteurs élémentaires dans la dimension horizontale qui successivement "voient" le même point de la scène et dont les valeurs mesurées pour un même point sont moyennées). Dans toute la suite du texte, "scanner", qui est un terme anglais, désignera le miroir des moyens de balayage. Le détecteur fonctionne en mode DC, c'est à dire en conservant la composante continue du signal, afin de ne pas perdre le contraste de la scène dans le sens vertical, Ces caméras ont de bonnes performances photométriques mais nécessitent d'une part l'utilisation d'un réimageur qui est composé de plusieurs optiques, habituellement des lentilles, et dont la fonction consiste à transporter l'image du diaphragme d'ouverture, qui se trouve au niveau du diaphragme froid, sur le scanner. Ces caméras nécessitent d'autre part l'utilisation d'une référence de température, pouvant par exemple consister dans un corps noir, lequel sera "vu" par le détecteur grâce à un léger surbalayage de la scène par les moyens de balayage, ce qui permet alors d'homogénéiser les détecteurs élémentaires que comporte le détecteur. Les deux éléments précédents, réimageur et référence de température, sont des éléments coûteux et encombrants.

Le brevet US 4972085 décrit un exemple d'architecture optique selon l'art antérieur possèdant un réimageur produisant une image près de l'écran froid.

D'où l'idée de concevoir une architecture optique simplifiée tout en conservant les propriétés photométriques des caméras de deuxième génération.

Ceci implique d'employer des solutions non classiques pour résoudre les problèmes habituels, qui permettront alors d'aboutir à des combinaisons très compactes pour des équipements portables et performants. La principale caractéristique réside dans la suppression du réimageur trop coûteux et trop encombrant ; ce qui entraîne inévitablement une certaine dégradation des performances photométriques. Il est alors possible de rendre l'architecture photométriquement saine par quelques modifications de l'architecture optique originale, en particulier en modifiant la forme du diaphragme froid du détecteur refroidi.

Une forme préférentielle de l'invention peut se résumer de la façon suivante.

Pour des raisons de coût et d'encombrement, le réimageur est supprimé. Le diaphragme d'ouverture n'étant alors plus imagé sur le scanner, la taille de celui-ci a tendance à augmenter. Dans toute la suite du texte, "stop" qui est un terme anglais, désignera la matérialisation du diaphragme d'ouverture. Afin donc de minimiser la taille du scanner, on est amené à éloigner le diaphragme d'ouverture du diaphragme froid et à le rapprocher du scanner. Le diaphragme d'ouverture s'éloignant du diaphragme froid, l'ouverture totale de celui-ci devient surdimensionée par rapport à l'ouverture utile de la caméra et une part importante de flux de structure atteint le détecteur ; ce qui comme on le verra dans la suite, peut devenir gênant, car ce flux de structure est par définition du flux parasite par opposition au flux utile du signal de la scène observée. Une correction photométrique au premier ordre est possible par la mise en place d'un miroir de conjugaison de telle sorte que, hormis le flux utile, le détecteur ne volt plus que du flux froid.

Cependant les problèmes de flux de structure ne sont pas complètement résolus, à cause de flux parasite résiduel qu'on détaillera dans la suite. Une correction photométrique au deuxième ordre est obtenue en donnant au diaphragme froid une forme particulière.

Les considérations précédentes ont trait à une réalisation préférentielle de l'invention qui permet de résoudre le problème plus général qui est de lisser et/ou de diminuer l'inefficacité photométrique sur l'étendue du détecteur lorsque cette inefficacité est due à l'apparition de flux de structure parasite laquelle provient de ce que le diaphragme d'ouverture est distinct du diaphragme froid

Ce problème peut être résolu, selon l'objet de l'invention, par toute architecture optique où on donne au diaphragme froid une forme particulière adaptée.

Selon l'invention, il est prévu une architecture optique selon la revendication 1.

Selon une réalisation préférentielle de l'invention, il est prévu une architecture optique selon la revendication 3.

L'invention sera mieux comprise et d'autres caractéristiques et avantages de cette invention apparaîtront à l'aide de la description ci-après et des dessins joints où :

- la figure 1 représente un exemple d'architecture optique d'une caméra avec réimageur, dite de deuxième génération, selon l'art antérieur.
- la figure 2a montre une architecture optique générale d'une caméra en grand champ (GC), selon l'invention.
- la figure 2b montre une architecture optique générale d'une caméra en petit champ (PC), selon l'invention.
- la figure 3a donne l'allure de la fonction de transfert de modulation (FTM) de l'architecture optique d'une caméra, selon l'art antérieur.
- la figure 3b donne l'allure de la fonction de transfert de modulation (FTM) de l'architecture optique d'une caméra, selon l'invention.
- la figure 4a montre la réduction du flux de structure par le miroir de conjugaison d'une caméra (cas d'un détecteur élémentaire situé au centre du détecteur), selon l'invention.
- la figure 4b montre la réduction du flux de structure par le miroir de conjugaison d'une caméra (cas d'un détecteur élémentaire situé au bord du détecteur), selon l'invention.
- la figure 5a représente la forme hippodromique du diaphragme froid du détecteur d'une caméra, selon l'art antérieur.
- la figure 5b représente la forme optimisée du diaphragme froid du détecteur d'une caméra, selon l'invention.
- la figure 6 représente les variations de l'inefficacité photométrique le long du détecteur, selon différentes formes du diaphragme froid.
- la figure 7a représente les variations de l'image de la pupille d'entrée sur la lentille de tête de l'afocal frontal au cours du balayage, lorsque la pupille de sortie de l'afocal frontal est situé sur l'image du stop.
- la figure 7b représente les variations de l'image de la pupille d'entrée sur la lentille de tête de l'afocal frontal au cours du balayage, lorsque la pupille de sortie de l'afocal frontal est situé entre le scanner et le stop.
- la figure 7c représente les variations de l'image de la pupille d'entrée sur la lentille de tête de l'afocal frontal au cours du balayage, lorsque la pupille de sortie de l'afocal frontal est situé sur le scanner.
- la figure 8 représente l'afocal long de l'architecture optique d'une caméra, selon l'art antérieur.
- la figure 9 représente l'afocal court de l'architecture optique d'une caméra, selon l'invention.
- la figure 10 montre une architecture optique de la caméra dans sa version coudable, selon l'invention.

Des mêmes numéros sur des figures différentes renvoient à des éléments identiques.

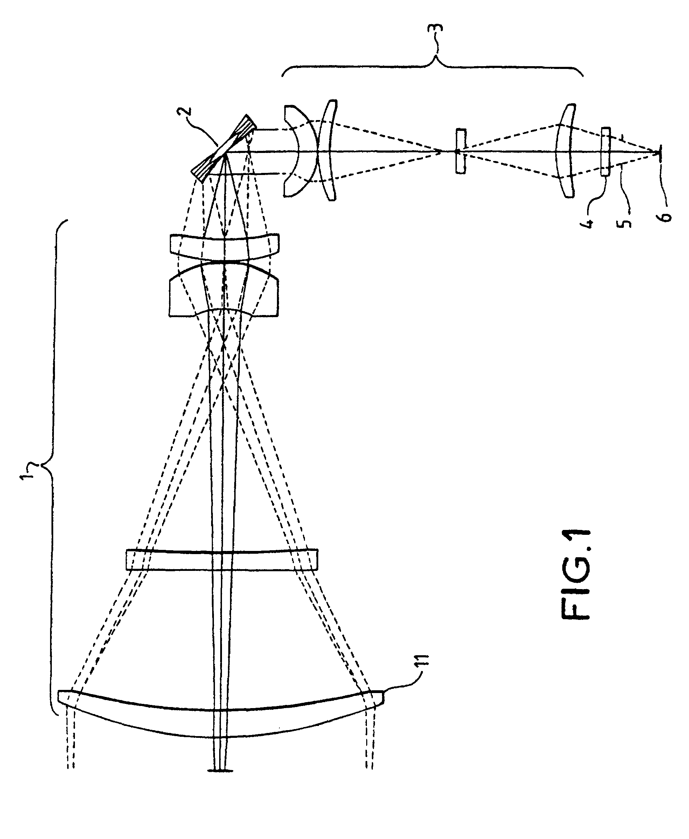

L'invention se rapporte au domaine des architectures optiques pour système de vision infrarouge, notamment utilisées dans les jumelles ou dans les caméras. Sur la figure 1, est représentée l'architecture optique d'une caméra selon l'art antérieur. Cette architecture optique peut se découper en quatre blocs principaux, qui sont l'afocal frontal 1 permettant de collecter le flux de scène, le scanner 2 permettant d'effectuer le balayage horizontal de la scène, le réimageur 3 permettant de transporter une image, des moyens de détection 4,5,6 permettant de recevoir le flux de scène, ainsi que des moyens de traitement du signal en aval non représentés ici permettant d'exploiter l'information contenue dans le flux de scène.

Cette architecture optique étant un système centré sur un axe optique, elle a un diaphragme d'ouverture qui est matérialisé au sein de cette architecture par un stop. Afin que le diaphragme d'ouverture soit indépendant de la position de balayage du scanner 2, le stop est situé en aval du scanner 2, le sens de l'axe de l'architecture optique allant de la lentille de tête 11 vers le détecteur 6. Les images du diaphragme d'ouverture par les différentes parties de l'architecture optique sont des pupilles.

L'afocal frontal 1 est de préférence de type Képler, c'est à dire qu'il est composé de deux lentilles ou groupes de lentilles convergents ; il comporte de préférence également une lentille ou un groupe de lentilles intermédiaire divergent, dont les fonctions sont par exemple la correction des aberrations, la focalisation rapprochée, l'athermalisation et lé changement de champ. Il comporte une lentille de tête 11. La quantité de flux de scène collectée est directement liée au diamètre de la lentille de tête 11. Afin de minimiser son diamètre, on fait jouer à la lentille de tête 11 le rôle de pupille d'entrée de l'architecture optique en amenant l'image du diaphragme d'ouverture au voisinage de cette lentille de tête 11.

Le scanner 2 est un miroir rotatif qui permet le balayage horizontal de la scène, et dont l'axe de rotation est vertical par rapport à la scène. Pour éviter que l'image du stop par le scanner 2 soit dépendante de la position de balayage du scanner 2, l'axe de rotation du scanner 2 doit être proche de la surface réfléchissante afin de supprimer presque complètement le décalage pupillaire qui sans cela, ne manquerait pas d'apparaître au cours du balayage. Le décalage pupillaire consiste en un glissement de faisceau qui est gênant car il contraint à augmenter artificiellement la taille de la lentille de tête 11. En effet, pour chaque position de balayage différente, la pupille d'entrée glisse sur la lentille de tête 11. Par conséquent, pour que la lentille de tête 11 recouvre l'ensemble des traces des faisceaux, l'ouverture totale de l'afocal frontal 1 doit être supérieure à son ouverture instantanée qui correspond à la trace d'un faisceau pour une position de balayage. En l'absence de décalage pupillaire, l'ouverture totale de l'afocal frontal 1 peut donc se limiter à son ouverture instantanée, ce qui est le cas de l'invention.

Le réimageur 3 permet de transporter l'image de la scène observée, du scanner 2 aux moyens de détection 4,5,6. Il est composé de deux lentilles ou groupes de lentilles comprenant généralement des surfaces asphériques. Le réimageur est donc un élément coûteux et encombrant. Il est de plus particulièrement sensible aux dérives thermiques, car les défocalisations thermiques de ses lentilles successives s'ajoutent, générant des phénomènes de "dentelé", décrits ci-après, au niveau du détecteur 6, qui dégradent beaucoup la qualité de l'image. Une correction par autoathermalisation du réimageur 3 reste possible, mais elle est également coûteuse.

Les moyens de détection 4,5,6 sont composés d'abord d'un détecteur 6 situé dans le plan focal de l'architecture optique. Ce détecteur 6 est un détecteur de type barrette, c'est à dire que ce détecteur est une matrice de détecteurs élémentaires, ayant un ou quelques détecteurs élémentaires dans le sens horizontal de la scène, et ayant un grand nombre de détecteurs élémentaires dans le sens vertical de la scène de manière à couvrir toute la dimension verticale de la scène. Ce détecteur ne se présente pas forcément sous une forme parfaitement rectangulaire. Ainsi, le détecteur utilisé est un détecteur SOFRADIR 288 x 4, à effet TDI (voir plus haut). Il possède 288 lignes de 4 détecteurs chacune et présente une structure en quinconce, c'est à dire que les lignes impaires et paires de détecteurs élémentaires sont décalées ; plus précisément, les deux colonnes de lignes impaires; respectivement paires, sont composées de 144 successions comprenant chacune une ligne de détecteurs élémentaires suivie d'une ligne vide, respectivement une ligne vide suivie d'une ligne de détecteurs élémentaires. Le phénomène de "dentelé" du paragraphe précédent résulte d'une désadaptation des retards entre les lignes impaires et paires, ces retards étant fonction du point de focalisation de l'architecture optique. Ce détecteur 6 est refroidi par un doigt froid non représenté ici qui se prolonge par un écran froid non représenté ici comportant une ouverture qui est un diaphragme froid 5 selon une technique bien connue ; un hublot de protection 4, transparent au rayonnement infrarouge, ou au moins à certaines sous-bandes du rayonnement infrarouge, permet de fermer l'enceinte cryogénique dans laquelle se trouve donc le détecteur 6.

Dans cette architecture, le stop est confondu avec le diaphragme froid 5, donc seul le flux de scène, c'est à dire du flux utile, arrive sur le détecteur 6, ce qui permet de s'affranchir des problèmes de flux de structure qui par définition est du flux parasite. En observant une scène de température uniforme, l'intensité de l'image obtenue présente un dôme dans sa dimension verticale qui vient de ce que l'angle solide projeté pour chaque détecteur élémentaire est fonction de sa position le long du détecteur 6. Ce dôme est compensable à la calibration par une opération de traitement du signal effectuée en aval de l'architecture optique. Pour que le stop joue effectivement le rôle de diaphragme d'ouverture, il faut que ni l'afocal frontal 1, ni le réimageur 3, ne vignettent les faisceaux utiles.

Afin de minimiser la taille du scanner 2, le stop, confondu avec le diaphragme froid 5, est imagé sur le scanner 2 par l'intermédiaire du réimageur 3.

Donc au vu des objectifs de l'invention, qui sont principalement de réaliser une architecture optique photométriquement saine mais peu coûteuse et relativement simple, la solution classique, qui permet d'éliminer le flux parasite vu par le détecteur 6 au travers de son hublot de protection 4 en confondant le stop et le diaphragme froid 5, puis en imageant le stop sur le scanner 2, cette image du stop étant elle-même imagée sur la lentille de tête 11 de l'afocal frontal 1, doit être écartée comme inadaptée.

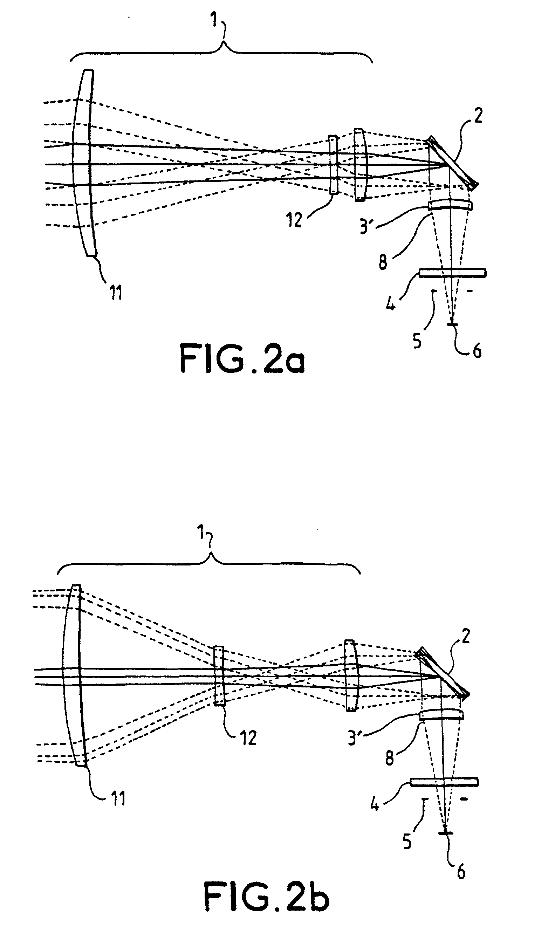

L'architecture optique de l'invention a été conçue dans le but de conserver une photométrie saine tout en s'affranchissant du réimageur 3. Sur les figures 2a et 2b, sont représentées deux configurations de l'architecture optique d'une caméra selon l'invention, respectivement en grand champ (GC) et en petit champ (PC). L'architecture est donc plus simple, elle comporte un afocal frontal 1 comportant une lentille de tête 11, un scanner 2, un imageur simple 3' comportant une lentille, et un détecteur 6 refroidi situé dans le plan focal de l'architecture optique, ce détecteur ayant également un hublot de protection 4 et un diaphragme froid 5.

L'introduction d'un imageur simple 3' à une lentille en remplacement du réimageur 3 jugé trop coûteux et encombrant, a un effet principal qui est de déplacer le diaphragme d'ouverture, lequel n'est alors plus confondu avec le diaphragme froid 5.

La place précise du stop 8 au sein de l'architecture optique est déterminée par les considérations suivantes : si le stop est situé en avant du scanner 2, par exemple dans l'afocal frontal 1, le flux utile reçu par le détecteur varie au cours du balayage au gré des aberrations pupillaires de l'afocal frontal 1.

Ces aberrations pupillaires de l'afocal frontal 1 peuvent être alors corrigées par un cache mis en place dans l'architecture optique, cache qui vignetterait astucieusement à cet endroit de l'architecture optique la pupille aux extrémités du balayage, de manière à rendre constant au cours du balayage le flux reçu par un détecteur élémentaire du détecteur 6. Pour éviter cela, le stop 8 est donc placé entre le scanner 2 et le détecteur 6, la pupille de sortie de l'architecture optique, image du diaphragme d'ouverture par les éléments optiques situés en aval du diaphragme d'ouverture, reste invariante au cours du balayage. Cela se traduit par l'absence de dôme dans le sens horizontal, dans l'image que le détecteur 6 donne d'une scène uniforme, ce qui est avantageux, le traitement du signal utilisé en aval de l'architecture optique n'étant capable d'effectuer une correction de non-uniformité, que dans le sens vertical.

De préférence, on rapproche le stop 8 le plus possible du scanner 2 pour deux raisons. La première est qu'on minimise ainsi la taille du scanner 2. La deuxième raison concerne la pupille d'entrée de l'architecture optique. La pupille d'entrée est l'image par les éléments optiques situés en amont du stop 8, de ce même stop 8. Il faut donc distinguer entre la pupille d'entrée horizontale, c'est à dire dans le sens horizontal de la scène, et la pupille d'entrée verticale, c'est à dire dans le sens vertical de la scène. En effet, l'image de la scène par l'architecture optique est immobile dans le sens vertical puisque le balayage est horizontal. La pupille d'entrée verticale est donc bien l'image du stop 8. Par contre, le balayage horizontal effectué par le scanner 2, fait glisser horizontalement la pupille d'entrée horizontale à chaque position de balayage. La pupille d'entrée horizontale pour l'ensemble des positions de balayage du scanner 2, est donc l'image de ce même scanner 2. Afin de minimiser la taille du diamètre de la lentille de tête 11 qui joue le rôle de pupille d'entrée, il est nécessaire de minimiser le décalage entre les pupilles horizontale et verticale, c'est à dire rapprocher le plus possible le stop 8 du scanner 2.

Donc, la recherche d'une architecture optique compacte dont les éléments soient les plus petits possibles, amène à matérialiser le diaphragme d'ouverture sur la lentille de l'imageur simple 3', c'est à dire à positionner le stop 8 au niveau de cette lentille, et donc à rapprocher le stop 8 le plus possible du scanner 2, c'est à dire théoriquement jusqu'au débattement de celui-ci ; cependant d'autres considérations peuvent amener à éloigner un peu le stop 8 de sa position optimale, ce qui rendra le système moins performant, mais celui-ci restera néanmoins dans le cadre de l'invention.

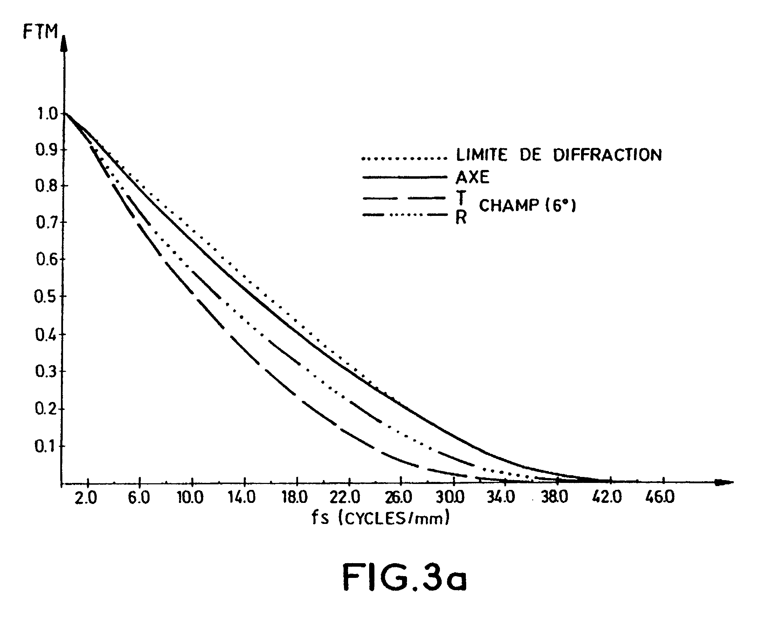

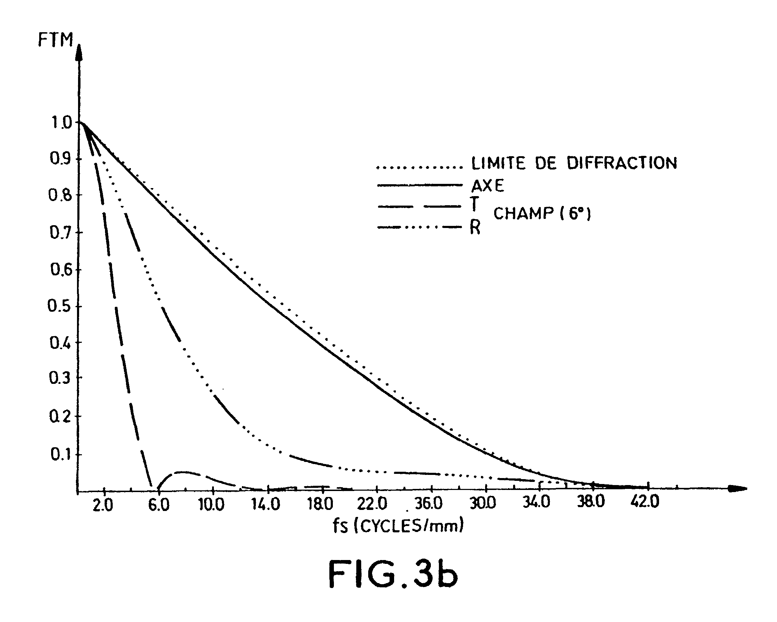

Un inconvénient de l'imageur simple 3' par rapport au réimageur 3, comme on peut le voir sur les figures 3a et 3b, est une mauvaise qualité optique en bord de champ. Cette qualité optique peut se constater sur les figures 3a et 3b. La figure 3a représente le cas d'une architecture optique avec réimageur selon l'art antérieur, la figure 3b représente le cas d'une architecture optique avec imageur simple selon l'invention. Les fonctions de transfert de modulation (FTM) sont données en fonction de la fréquence spatiale (fs) en cycles/mm. Sur chaque figure, on visualise la limite de diffraction, la FTM le long de l'axe, la FTM en bord de champ, les courbes étant représentées avec un champ de 6 degrés, sagittalement ou tangentiellement (T) d'une part, radialement (R) d'autre part. En ce qui concerne la FTM le long de l'axe, les cas avec réimageur et avec imageur simple présentent des performances équivalentes : la FTM suit pratiquement la limite de diffraction. En bord de champ, que ce soit sagittalement ou bien radialement, dans le cas avec réimageur la FTM reste relativement proche de la limite de diffraction, alors que dans le cas avec imageur simple la FTM chute rapidement en fonction de la fréquence spatiale. En pratique, lors d'essais avec des opérateurs humains, pour les applications envisagées, la qualité optique obtenue en bord de champ ne s'est pas révélée gênante.

Le stop 8 étant en amont du diaphragme froid 5, il apparaît des problèmes de flux de structure parasite qui sont directement liés à l'inefficacité photométrique de l'architecture optique. L'inefficacité photométrique dépend du détecteur élémentaire considéré, c'est le rapport $\Omega_{tot}(i)/\Omega_{ut}(i)$ pour le $i^{ème}$ détecteur élémentaire, $\Omega_{tot}(i)$ étant l'angle solide projeté total délimité par le diaphragme froid 5 pour le $i^{ème}$ détecteur élémentaire et $\Omega_{ut}(i)$ étant l'angle solide projeté utile délimité par le stop 8 et éventuellement vignetté par le diaphragme froid 5. L'inefficacité photométrique est l'inverse de ce que l'on appelle traditionnellement le rendement photométrique. Elle est élevée et très inhomogène. Le flux de structure parasite est un paramètre important qui influe sur l'inefficacité photométrique.

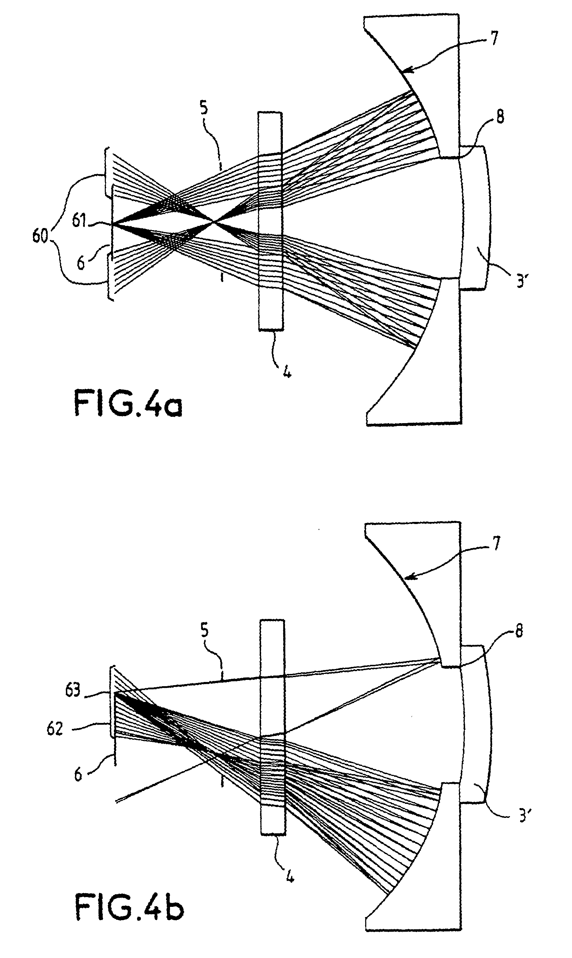

Un premier remède consiste à réduire ce flux de structure parasite en utilisant le miroir de conjugaison 7 pour délimiter le stop 8, comme on peut le voir sur les figures 4a et 4b, de telle sorte que le détecteur 6, hormis le flux utile ayant traversé le stop 8, ne voit plus que du flux très froid venant de l'intérieur de l'enceinte cryogénique au lieu du flux chaud qui venait de l'intérieur de la caméra. La figure 4a représente une partie détaillée de l'architecture optique comprenant l'imageur simple 3', le hublot protecteur 4, le diaphragme froid 5, le détecteur 6, le miroir de conjugaison 7, et le stop 8. Le tracé des faisceaux lumineux montre de quelles parties 60 de la structure interne de la caméra provient le flux froid reçu par le détecteur élémentaire 61 situé au centre du détecteur 6 ; cela donne également une idée de l'angle solide projeté total $\Omega_{tot}(61)$ vu par ce détecteur élémentaire 61. Sur la figure 4b, le tracé des faisceaux lumineux montre de quelles parties 62 de la structure interne de la caméra provient le flux froid reçu par le détecteur élémentaire 63 situé au bord du détecteur 6. L'angle solide projeté total $\Omega_{tot}(63)$ vu par ce détecteur élémentaire 63 est plus faible que celui vu par le détecteur 61. A cause de la position du stop 8 relativement plus éloignée du détecteur 6 que celle du diaphragme froid 5, les variations le long du détecteur 6 de l'angle solide projeté utile $\Omega_{ut}(i)$ pour le $i^{ème}$ détecteur élémentaire, sont nettement moins importantes que celles de l'angle solide projeté total $\Omega_{tot}(i)$, et peuvent être considérées comme négligeables.

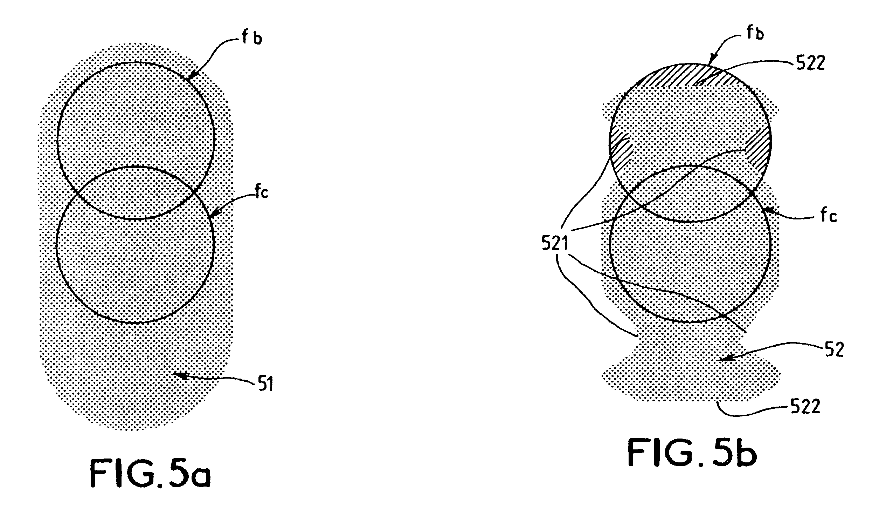

Mais le coefficient de réflexion du miroir sphérique de conjugaison 7 est inférieur à 1 car celui-ci est un peu diffusant et émissif, et le coefficient de transmission du hublot de protection 4 du détecteur 6 est également inférieur à 1 car son coefficient d'absorption est non nul ; le hublot 4, en contact avec le corps de l'enceinte cryogénique qui est chaud, émet lui-même du flux chaud qui directement ou par réflexion sur le miroir sphérique de conjugaison 7 arrive sur le détecteur 6. Le flux de structure qui est alors reçu par le détecteur 6 est du flux parasite qui n'est pas négligeable et dont l'effet est accentué par le fait que la température interne de la caméra est habituellement très supérieure à la température de la scène. Or, ce flux parasite n'a pas la même valeur selon que le détecteur élémentaire considéré se trouve au centre du détecteur, cas de la figure 4a, ou au bord du détecteur cas de la figure 4b, car la valeur de l'angle solide projeté total varie. Par conséquent, comme la valeur de l'angle solide projeté utile reste approximativement constante, l'inefficacité photométrique, rapport de l'angle solide projeté total sur l'angle solide utile, est élevée et de plus varie beaucoup d'une ligne à l'autre du détecteur 6. Lorsque le stop 8 n'est pas confondu avec le diaphragme froid 5, celui-ci doit avoir, comme on peut le voir sur la figure 5a, une forme hippodromique 51, si l'on veut éviter tout vignettage des faisceaux utiles, que ce soient les faisceaux fc arrivant sur le centre du détecteur 6 ou bien les faisceaux fb arrivant sur le bord du détecteur 6. Mais cette forme 51, simple et naturelle, du diaphragme froid 5, aboutit, lorsque le stop 8 est distinct du diaphragme froid 5, à une inefficacité photométrique élevée et inhomogène ; ce qui est inacceptable car cela se traduit par une plage de variation de température trop importante, de l'ordre d'une dizaine de degrés, qui va entraîner la saturation du codeur de la partie traitement du signal située en aval de l'architecture optique.

Comme il n'est pas possible d'éliminer le flux de structure parasite, on peut essayer de supprimer ses effets. Pour cela, sur la figure 5b, est représentée une forme particulière 52 du diaphragme froid 5 selon l'invention, optimisée par ordinateur, qui vignette astucieusement les faisceaux fb, le vignettage étant représenté par les parties hachurées. De plus on remarque que cette forme optimisée 52 n'affecte pas l'ouverture de la caméra au centre du champ, car elle ne vignette pas les faisceaux utiles fc arrivant au centre de la barrette.

Cette forme 52 du diaphragme froid 5 est une forme sensiblement hippodromique, ayant sa grande dimension dans le sens vertical de la scène, ayant des échancrures 521 au niveau des côtés verticaux, ces échancrures au nombre de quatre étant deux à deux symétriques par rapport aux axes de symétrie horizontal et vertical, et ayant des extrémités supérieure et inférieure 522 aplaties.

Plus précisément, cette forme 52 du diaphragme froid 5 se définit comme la surface autour de l'origine délimitée par les équations suivantes, y étant l'ordonnée le long de l'axe vertical de la scène et x l'abscisse :

$$|y| = 4,25$$

$$|x| = [2,45 - 0,56 \, (1 - \cos \, (0,49 \, y^2))]$$

ou toute surface homothétique à celle-ci.

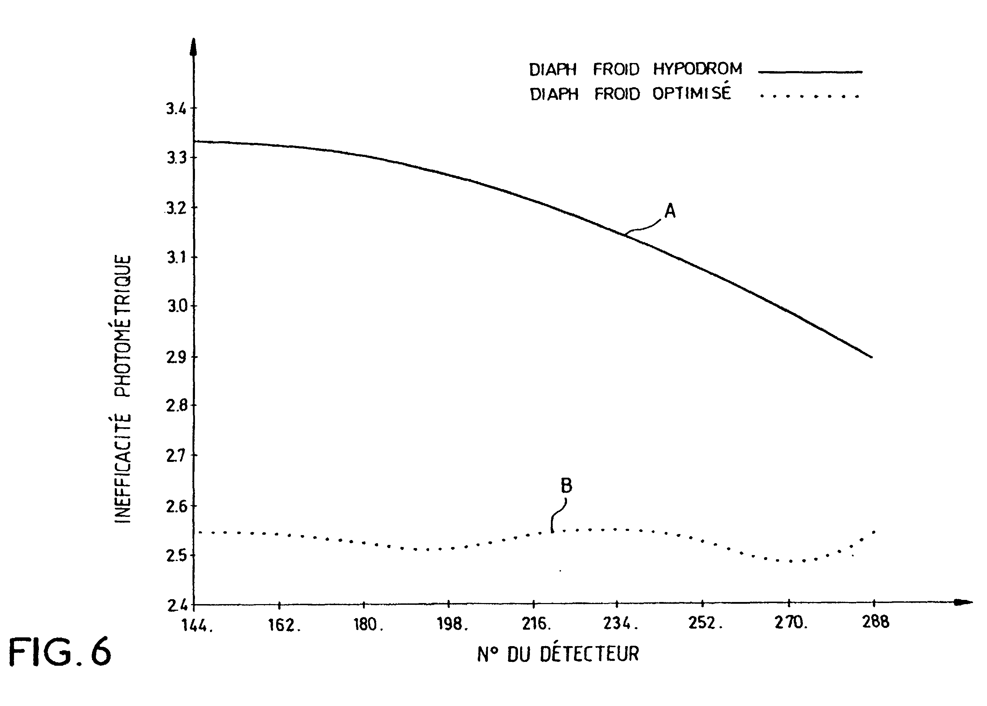

Le vignettage astucieux des faisceaux utiles fb par la forme 52 du diaphragme froid 5 va permettre de lisser d'un bout à l'autre du détecteur 6 l'inefficacité photométrique, il va également réduire celle-ci. Jouer sur la forme du diaphragme froid 5 permet ainsi de minimiser les variations de l'inefficacité photométrique le long du détecteur 6 comme on peut le voir sur la figure 6. En effet, la courbe A représente les variations de l'inefficacité photométrique le long du détecteur 6 dans le cas de la forme hippodromique 51 du diaphragme froid 5 et la courbe B dans le cas de la forme optimisée 52. La courbe B montre une inefficacité photométrique approximativement constante le long du détecteur 6 alors que celle de la courbe A varie de manière importante, et de surcroît celle de la courbe B est plus faible que celle de la courbe A.

La forme 52 optimisée par ordinateur du diaphragme froid 5 procure un double bénéfice que l'on constate sur la figure 6 : d'abord, le dôme résiduel de l'inefficacité photométrique, c'est à dire la variation de l'inefficacité photométrique le long du détecteur, est atténué d'un facteur 7 environ entre la courbe A et la courbe B; ensuite la valeur moyenne de l'inefficacité photométrique est sensiblement plus faible sur la courbe B que sur la courbe A. La caméra fonctionnant en mode DC, l'inhomogénéité de l'inefficacité photométrique aboutit, sur l'image d'une scène de température uniforme, à la visualisation d'un dôme dans le sens vertical qui peut être compensé au départ lors d'une calibration mais qui va réapparaître car il est fonction de la température interne de la caméra qui varie. Une compensation par calibration serait donc inefficace.

L'autre avantage de cette solution concernant la réduction de l'influence du flux parasite est qu'elle n'entraîne pas de coût supplémentaire, car le prix de la découpe du diaphragme froid 5 est indépendant de la forme de ce dernier.

Les autres solutions envisageables sont nettement plus coûteuses et pas nécessairement plus efficaces. On pourrait penser à améliorer le coefficient de réflexion du miroir sphérique de conjugaison 7. Mais outre la relativement faible influence de ce paramètre, son amélioration obligerait à recourir à un usinage diamant coûteux permettant d'obtenir une précision optique au niveau de la rugosité de la surface du miroir 7, alors qu'en optimisant la forme du diaphragme froid 5, on peut se contenter au niveau du miroir 7 d'une précision mécanique obtenue par un usinage classique amélioré. On pourrait également penser à réduire l'émissivité du hublot 4 en utilisant des matériaux moins absorbants mais plus coûteux que le Germanium standard et en leur faisant subir un traitement particulier également coûteux.

Dans le cas plus général où le diaphragme d'ouverture est distinct du diaphragme froid, ce qui génère l'apparition de flux de structure parasite sur le détecteur, la solution préconisée par l'invention pour supprimer les effets de ce flux de stucture parasite reste valable. L'emploi d'une architecture optique où on donne au diaphragme froid une forme particulière adaptée, permet alors de lisser et/ou de diminuer l'inefficacité photométrique sur l'étendue du détecteur.

Plus précisément, l'architecture optique utilisée est alors une architecture optique pour système de vision infrarouge avec un axe optique, ayant un diaphragme d'ouverture. Elle comporte en séquence, des moyens permettant de collecter le flux d'une scène, un dispositif optique formant une image de la scène, des moyens de détection refroidis, incluant un détecteur situé dans le plan focal du dispositif et un diaphragme froid ; le diaphragme d'ouverture est distinct du diaphragme froid, et celui-ci a une forme telle que l'inefficacité photométrique est lissée sur l'étendue du détecteur et/ou diminuée.

Un autre problème déjà évoqué plus haut provient du fait que la pupille horizontale coïncide avec le miroir du scanner 2 alors que la pupille verticale coïncide avec le stop 8. Les deux pupilles, horizontale et verticale, ont déjà été rapprochées l'une de l'autre le plus possible. Mais ces deux pupilles étant encore distinctes, la lentille de tête 11 de l'afocal frontal 1 ne peut donc pas jouer le rôle de pupille d'entrée de l'architecture optique, ce qui augmente fortement son diamètre et par conséquent son coût.

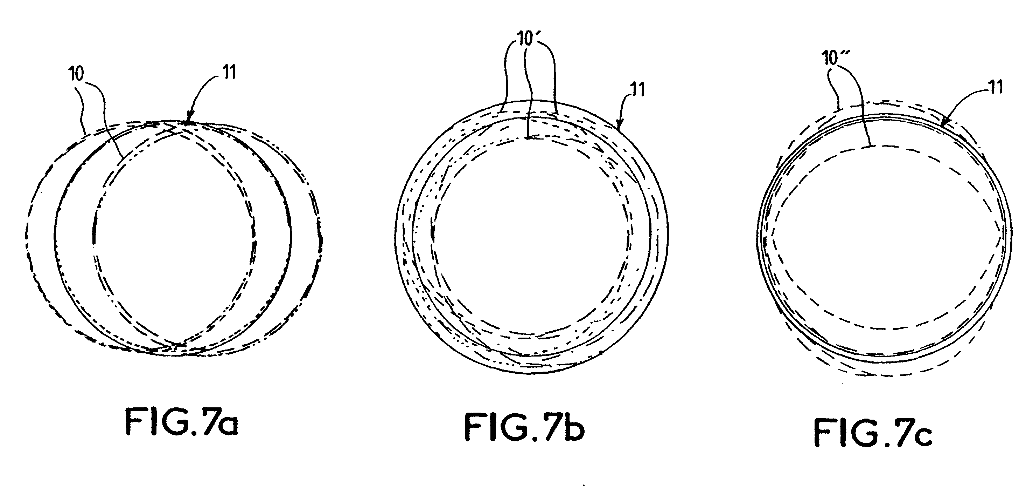

L'afocal frontal 1 est de type Képler, c'est à dire qu'on peut imager sa pupille de sortie au voisinage du scanner 2 tout en conservant sa pupille d'entrée au voisinage de sa lentille de tête 11. La pupille de sortie de l'afocal frontal 1 étant imagée sur le scanner 2 qui coïncide avec la pupille horizontale de l'ensemble de l'architecture optique, la pupille d'entrée horizontale de l'ensemble de l'architecture optique est alors au voisinage de la lentille de tête 11. On minimise le diamètre de la lentille de tête 11 en le réduisant à la taille de la pupille d'entrée horizontale de l'ensemble de l'architecture optique. Sur les figures 7a, 7b, 7c respectivement, les images 10,10',10", représentées en traits pointillés, de la pupille d'entrée sur la lentille de tête 11 de l'afocal frontal 1 varient en fonction de la position de la pupille de sortie de l'afocal frontal 1 au sein de l'architecture optique. La figure 7a montre le glissement horizontal de l'image 10 sur la lentille de tête 11 de l'afocal frontal 1, lorsque la pupille de sortie de l'afocal frontal 1 est située sur l'image du stop 8 . La figure 7b montre le glissement bidimensionnel de l'image 10' sur la lentille de tête 11 de l'afocal frontal 1, lorsque la pupille de sortie de l'afocal frontal 1 est située entre le scanner 2 et le stop 8. La figure 7c montre le glissement vertical de l'image 10" sur la lentille de tête 11 de l'afocal frontal 1, lorsque la pupille de sortie de l'afocal frontal 1 est située sur le scanner 2. En configuration petit champ, la plus défavorable, comme on se trouve dans le cas de la figure 7c, il en résulte un léger vignettage vertical des faisceaux utiles qui peut donc être corrigé par traitement du signal situé en aval de l'architecture optique, le système de traitement du signal pouvant homogénéiser le signal dans le sens vertical. En configuration grand champ, il n'y a aucun vignettage des faisceaux utiles.

Une deuxième amélioration par rapport aux systèmes existants est la suppression de la référence de température. Habituellement, la dérive thermique des détecteurs élémentaires est compensée par une référence de température, de type corps noir, située dans le plan focal intermédiaire de l'afocal frontal 1, de sorte qu'il suffit d'un léger surbalayage de la scène par le scanner 2 pour assurer à l'ensemble des détecteurs élémentaires une luminance uniforme. Cette référence de température contenue dans la caméra permet de recaler les détecteurs à chaque balayage. Mais hormis le fait d'être lourde, coûteuse et d'avoir une consommation importante, pour une fiabilité qui n'est pas toujours optimale, la présence de cette référence de température est contraignante au niveau de l'implantation de l'architecture optique, dans la mesure où elle impose d'avoir le plan focal intermédiaire de l'afocal frontal 1 qui soit dégagé. Dans le présent mode de réalisation, cette référence de température étant absente, l'homogénéisation verticale, c'est à dire la compensation de la dérive des différents détecteurs élémentaires les uns par rapport aux autres, est effectuée en aval de l'architecture optique par traitement du signal. Une fois la dérive des détecteurs élémentaires les uns par rapport aux autres compensée par traitement du signal, la dérive moyenne restante de l'ensemble des détecteurs élémentaires est faible.

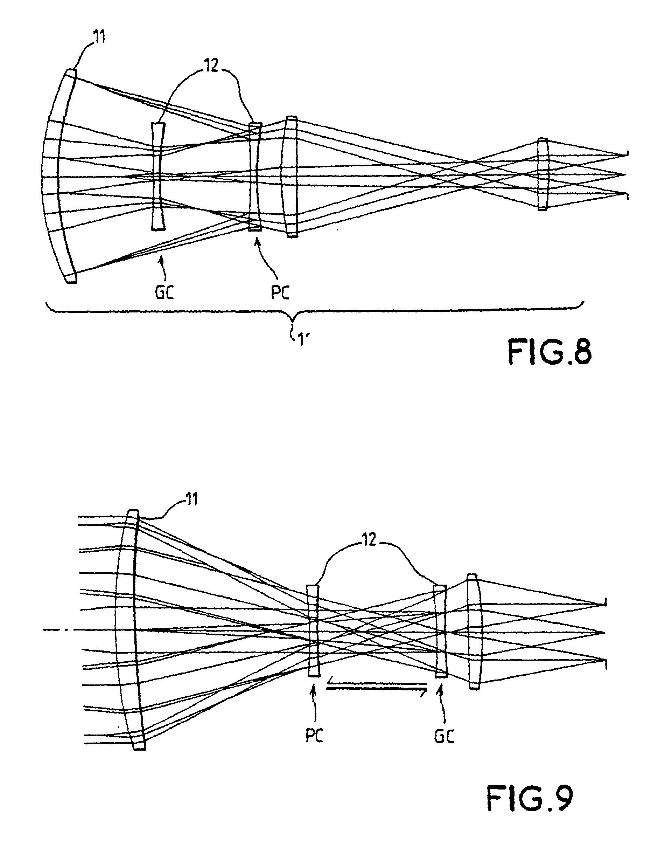

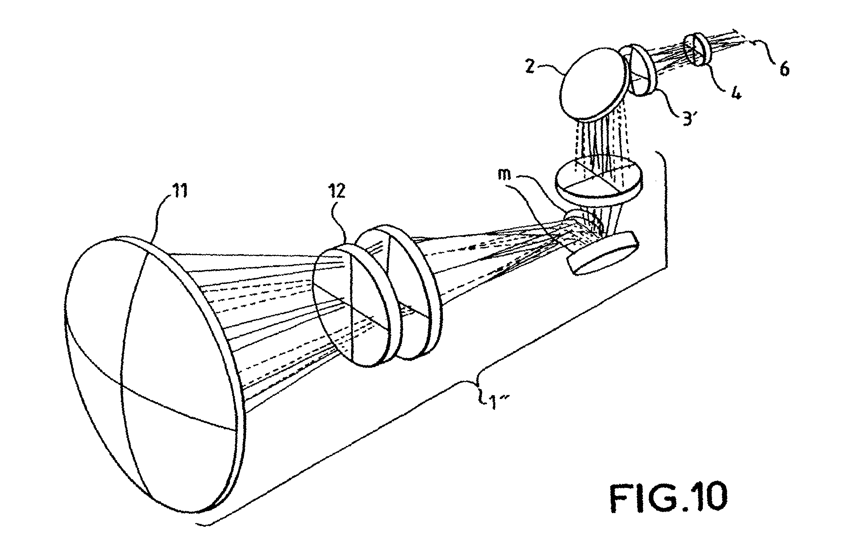

Il est intéressant d'avoir dégagé le plan focal intermédiaire de l'afocal frontal 1, car cela permet d'assurer la fonction changement de champ de manière simple et peu coûteuse. En effet, il existe deux options pour assurer la fonction changement de champ, c'est à dire la commutation entre le mode grand champ (GC) et le mode petit champ (PC) : soit celle qui consiste à faire basculer un groupe de lentilles au niveau de l'afocal frontal ; soit celle qui consiste à rendre libre en translation l'une des lentilles intermédiaires de l'afocal frontal. Dans cette deuxième option représentée sur la figure 8, la lentille dite de "changement de champ" 12 est ordinairement la deuxième lentille 12 d'un afocal frontal long 1' à au moins quatre lentilles. La lentille de changement de champ 12 est représentée dans ses deux positions, grand champ (GC) et petit champ (PC). Le fait que l'on ait dégagé le plan focal intermédiaire permet selon l'invention de réduire le nombre de lentilles. En effet, on a prévu selon l'invention d'utiliser un afocal court à trois lentilles en mettant à profit le fait que la deuxième lentille de changement de champ peut traverser le plan focal intermédiaire de l'afocal frontal, ce qui est impossible lorsqu'une référence de température occupe déjà ce plan focal intermédiaire, La figure 9 représente un afocal court 1 selon l'invention, dont l'utilisation est rendue possible par l'absence de la référence de température. La lentille de changement de champ 12 permet également la focalisation rapprochée de l'ensemble de l'architecture optique ; il est également possible de rattraper la défocalisation due aux dérives thermiques. Cependant la conséquence de l'utilisation d'un afocal frontal court 1, c'est à dire à trois lentilles, est que celui-ci est non coudable du fait que les miroirs permettant la coudabilité de l'afocal frontal 1 doivent nécessairement être petits et par conséquent se situer obligatoirement au voisinage du plan focal intermédiaire de l'afocal frontal 1. Une option coudable de l'invention est représentée sur la figure 10. L'afocal frontal 1" est coudable, mais c'est un afocal frontal long, c'est à dire à quatre lentilles, comportant des miroirs m.

L'optimisation des paramètres dans le cadre de l'invention, réalisée pour le mode de réalisation décrit, aboutit aux caractéristiques suivantes :

- bande spectrale utile : 7,5-10,5$\mu$m
- détecteur SOFRADIR type barrette : 288 x 4 éléments
- ouverture utile nominale au centre du champ : f/2,9
- PC : 4° x 3° ; GC : 8° x 6°
- focale de l'imageur : 38,6mm
- angle de débattement du scanner : ± 4° (± 8° avec optiques supplémentaires)
- grossissement de l'afocal :

> PC: -4
> GC : - 2

**Revendications**

1. Architecture optique pour système de vision infrarouge avec un axe optique, ayant un diaphragme d'ouverture, et comportant en séquence :

   - des moyens permettant de collecter le flux dune scène (1),
   - un dispositif optique formant une image de la scène (3,3'),
   - des moyens de détection refroidis, incluant un détecteur (6) situé dans le plan focal du dispositif et un diaphragme froid (5), le diaphragme d'ouverture étant distinct du diaphragme froid (5),

   l'architecture étant **caractérisée en ce que** le diaphragme froid (5) a une forme (52) vignettant partiellement la région périphérique de la trace des faisceaux utiles provenant de la scène de manière à ce que l'inefficacité photométrique soit lissée sur l'étendue du détecteur (6) et/ou diminuée, par rapport à l'inefficacité photométrique d'un diaphragme froid dont la forme (51) correspond à la trace des faisceaux utiles provenant de la scène.

2. Architecture optique selon la revendication 1, **caractérisée en ce que** le diaphragme d'ouverture est situé en amont du diaphragme froid (5), et est matérialisé par un miroir de conjugaison (7) qui le délimite et dont la face réfléchissante est tournée vers le détecteur (6).

3. Architecture optique selon la revendication 1, **caractérisé en ce :**

   - **qu'**entre les moyens permettant de collecter le flux de la scène (1) et le dispositif optique formant une image de la scène (3, 3'), l'architecture optique comporte des moyens de balayage (2) effectuant un balayage horizontal de la scène,
   - **que** les moyens permettant de collecter le flux de la scène (1) sont un afocal frontal,
   - **que** le dispositif optique est un imageur simple (3') comportant une lentille et étant le plus proche possible des moyens de balayage (2),
   - **que** le détecteur est un détecteur de type barrette (6),
   - **que** le diaphragme d'ouverture est situé au niveau de la lentille de l'imageur simple (3') et est matérialisé par un miroir de conjugaison (7) qui le délimite et dont la face réfléchissante est tournée vers le détecteur (6).

4. Architecture optique selon l'une quelconque des revendications 2 à 3, **caractérisée en ce que** le miroir de conjugaison (7) est un miroir sphérique.

5. Architecture optique selon l'une quelconque des revendications 3 à 4, **caractérisée en ce que** la forme (52) du diaphragme froid (5) est une forme sensiblement hippodromique, ayant sa grande dimension dans le sens vertical de la scène, ayant des échancrures (521) au niveau des côtés verticaux, ces échancrures au nombre de quatre étant deux à deux symétriques par rapport aux axes de symétrie horizontal et vertical, et ayant des extrémités supérieure et inférieure (522) aplaties.

6. Architecture optique selon la revendication 5, **caractérisée en ce que** la forme particulière (52) du diaphragme froid (5) est la surface autour de l'origine délimitée par les équations suivantes, y étant l'ordonnée le long de l'axe vertical de la scène et x l'abscisse :

$$| y | = 4,25$$

$$| x | = [2,45 - 0,56 \, (1 - \cos \, (0,49 \, y^2))]$$

ou toute surface homothétique à celle-ci.

7. Architecture optique selon l'une quelconque des revendications 3 à 6, **caractérisée en ce que** l'afocal frontal (1) comporte une séquence de trois lentilles seulement, is deuxième lentille libre en translation servant de lentille de changement de champ (12) et permettant également la focalisation rapprochée et l'athermalisation de l'ensemble de l'architecture optique.

8.  Architecture optique selon l'une quelconque des revendications 3 à 7, **caractérisée en ce que** l'afocal frontal (1) est disposé par rapport aux moyens de balayage (2) de telle sorte que la pupille de sortie de l'afocal frontal (1) soit imagée sur les moyens de balayage (2), et **en ce que** le diamètre de la lentille de tête (11) de l'afocal frontal (1) est réduit à la dimension de la taille dans le sens horizontal de la pupille d'entrée de l'ensemble de l'architecture optique.

9.  Caméra comportant une architecture optique selon Tune quelconque des revendications 1 à 8.

10. Jumelle comportant une architecture optique selon l'une quelconque des revendications 1 à 8.

**Patentansprüche**

1.  Optische Struktur für ein Infrarot-Sichtgerät mit einer optischen Achse und mit einer Öffnungsblende, wobei die Struktur hintereinander aufweist:

    -   Mittel (1), um den Lichtfluß einer Szene zu sammeln,
    -   eine optische Vorrichtung (3, 3') zur Erzeugung eines Bilds der Szene,
    -   gekühlte Detektormittel mit einem Detektor (6), der sich in der Brennebene der Vorrichtung befindet, und mit einer kalten Blende (5), die sich von der Öffnungsblende unterscheidet,

    **dadurch gekennzeichnet, daß** die kalte Blende (5) eine Form (52) besitzt, die den Randbereich des Verlaufs der von der Szene kommenden Nutzstrahlen teilweise abdeckt, sodaß die photometrische Unwirksamkeit über die Ausdehnung des Detektors (6) im Vergleich zur photometrischen Unwirksamkeit einer kalten Blende, deren Form dem Verlauf der von der Szene kommenden Nutzstrahlen entspricht, geglättet und/oder verringert ist.

2.  Optische Struktur nach Anspruch 1, **dadurch gekennzeichnet, daß** die Öffnungsblende vor der kalten Blende (5) liegt und von einem Konjunktionsspiegel (7) gebildet wird, der die Öffnungsblende begrenzt und dessen reflektierende Seite dem Detektor (6) zugewandt ist.

3.  Optische Struktur nach Anspruch 1, **dadurch gekennzeichnet, daß**

    -   sie zwischen den Mitteln (1), die den Lichtfluß der Szene sammeln, und der optischen Vorrichtung (3, 3'), die ein Bild der Szene erzeugt, Abtastmittel (2) aufweist, die eine horizontale Abtastung der Szene bewirken,
    -   die Mittel (1) zum Sammeln des Lichtflusses der Szene von einem afokalen, frontalen Linsensystem gebildet werden,
    -   die optische Vorrichtung eine einfache Abbildungsvorrichtung (3') mit einer Linse ist, die möglichst nahe bei den Abtastmitteln (2) liegt,
    -   der Detektor (6) eine Detektorleiste ist,
    -   die Öffnungsblende in Höhe der Linse der einfachen Abbildungsvorrichtung (3') liegt und von einem Konjunktionsspiegel (7) gebildet wird, der die Öffnungsblende begrenzt und dessen reflektierende Seite dem Detektor (6) zugewandt ist.

4.  Optische Struktur nach einem beliebigen der Ansprüche 2 und 3, **dadurch gekennzeichnet, daß** der Konjunktionsspiegel (7) ein sphärischer Spiegel ist.

5.  Optische Struktur nach einem beliebigen der Ansprüche 3 und 4, **dadurch gekennzeichnet, daß** die Form (52) der kalten Blende (5) im wesentlichen die einer Rennbahn ist, deren große Abmessung in der senkrechten Richtung der Szene verläuft und die Einkerbungen (521) an den senkrechten Seiten besitzt, nämlich vier Einkerbungen, die paarweise symmetrisch bezüglich der waagrechten und der senkrechten Symmetrieachse einander gegenüberliegen, wobei die oberen und unteren Enden (522) dieser Form abgeflacht sind.

6.  Optische Struktur nach Anspruch 5, **dadurch gekennzeichnet, daß** die besondere Form (52) der kalten Blende (5) die um den Koordinatenursprung liegende Fläche ist, die durch die folgenden Gleichungen begrenzt wird, wobei y die Ordinate entlang der senkrechten Achse der Szene und x die Abszisse ist:

$$| y | = 4{,}25;$$

$$| x | = 2{,}45 - 0{,}56[1 - \cos(0{,}49y^2)];$$

    beziehungsweise eine beliebige dazu homothetische Fläche.

7.  Optische Struktur nach einem beliebigen der Ansprüche 3 bis 6, **dadurch gekennzeichnet, daß** das afokale, frontale Linsensystem (1) eine Abfolge von nur drei Linsen enthält, wobei die zweite, in Translationsrichtung frei bewegliche Linse als Feldwechsellinse (12) dient und auch die angenäherte Fokussierung und die Kompensation von thermisch bedingten Brennweitenänderungen der Gesamtheit der optischen Struktur erlaubt.

**8.** Optische Struktur nach einem beliebigen der Ansprüche 3 bis 7, **dadurch gekennzeichnet, daß** das afokale, frontale Linsensystem (1) bezüglich der Abtastmittel (2) so angeordnet ist, daß die Ausgangspupille des afokalen frontalen Linsensystems (1) auf die Abtastmittel (2) abgebildet wird, und daß der Durchmesser der Linse (11) am Kopf des afokalen, frontalen Linsensystems (1) in waagrechter Richtung auf die Abmessung der Eingangspupille der gesamten optischen Struktur begrenzt ist.

**9.** Kamera mit einer optischen Struktur nach einem beliebigen der Ansprüche 1 bis 8.

**10.** Feldstecher mit einer optischen Struktur nach einem beliebigen der Ansprüche 1 bis 8.

**Claims**

**1.** Optical architecture for an infrared vision system with an optical axis, having an aperture stop, and comprising, in sequence:

- means (1) allowing the flux from a scene to be collected,
- an optical device (3, 3') forming an image of the scene,
- cooled detection means which include a detector (6) located in the focal plane of the device and a cold stop (5), the aperture stop being separate from the cold stop (5).

     the architecture being **characterized in that** the cold stop (5) has a shape (52) partially vignetting the peripheral region of the trace of the useful rays coming from the scene so that the photometric inefficiency is smoothed out over the extent of the detector (6) and/or is decreased, compared with the photometric inefficiency of a cold stop whose shape (51) corresponds to the trace of the useful rays coming from the scene.

**2.** Optical architecture according to Claim 1, **characterized in that** the aperture stop is located upstream of the cold stop (5) and is physically formed by a conjugating mirror (7) which delimits it and the reflecting face of which is turned towards the detector (6).

**3.** Optical architecture according to Claim 1, **characterized:**

- **in that**, between the means (1) allowing the flux from the scene to be collected and the optical device (3, 3') forming an image of the scene, the optical architecture comprises scanning means (2) which carry out horizontal scanning of the scene,
- **in that** the means (1) allowing the flux from the scene to be collected are a front afocal,
- **in that** the optical device is a simple imager (3') having one lens and being as close as possible to the scanning means (2),

     **in that** the detector is a linear-array-type detector (6),

- **in that** the aperture stop is located at the lens of the simple imager (3') and is physically formed by a conjugating mirror (7) which delimits it and the reflecting face of which is turned towards the detector (6).

**4.** Optical architecture according to any one of Claims 2 to 3, **characterized in that** the conjugating mirror (7) is a spherical mirror.

**5.** Optical architecture according to any one of Claims 3 to 4, **characterized in that** the shape (52) of the cold stop (5) is approximately the shape of a hippodrome, having its large dimension in the vertical direction of the scene, having indentations (521) at the vertical sides, these indentations being four in number and being symmetrical in pairs with respect to the horizontal and vertical axes of symmetry, and having flattened upper and lower ends (522).

**6.** Optical architecture according to Claim 5, **characterized in that** the particular shape (52) of the cold stop (5) is the surface around the origin bounded by the following equations, y being the ordinate along the vertical axis of the scene and x the abscissa:

$$|y| = 4.25$$

$$|x| = [2.45 - 0.56 \, (1 - \cos \, (0.49 \, y^2)]$$

or any surface homothetical to the latter.

**7.** Optical architecture according to any one of Claims 3 to 6, **characterized in that** the front afocal (1) comprises a sequence of only three lenses, the second lens, being free to move translationally, serving as a field-changing lens (12) and also allowing close focusing and athermalization of the entire optical architecture.

**8.** Optical architecture according to any one of Claims 3 to 7, **characterized in that** the front afocal (1) is placed with respect to the scanning means (2) in such a way that the exit pupil of the front afocal (1) is imaged on the scanning means (2) and **in that** the diameter of the front lens (11) of the front afocal (1) is reduced to the dimension of the size in the horizontal direction of the entrance pupil of the entire optical architecture.

9. Camera having an optical architecture according to any one of Claims 1 to 8.

10. Pair of binoculars having an optical architecture according to any one of Claims 1 to 8.

FIG.1

FIG.2a

FIG.2b

FIG.3a

FIG.3b

FIG.4a

FIG.4b

FIG.5a

FIG.5b

EP 0 976 004 B1

FIG.6

FIG.7a  FIG.7b  FIG.7c

EP 0 976 004 B1

FIG.8

FIG.9

FIG.10